# FASCICULE DE BREVET EUROPEEN

(11) **EP 1 597 101 B1**
(45) Date de publication et mention de la délivrance du brevet: **27.01.2010**
(21) Numéro de dépôt: 04709258.0
(22) Date de dépôt: 09.02.2004
(51) Int. Cl.: B60J 7/02

(54) **TOIT ESCAMOTABLE DE VEHICULE**
VERSENKBARES DACH FÜR EIN FAHRZEUG
RETRACTABLE ROOF FOR A VEHICLE

(30) Priorité: 28.02.2003 FR 0302486
(43) Date de publication de la demande: 23.11.2005
(73) Titulaire: SEBA, 75011 Paris (FR)
(72) Inventeur: QUEVEAU, Gérard, F-79140 Le Pin (FR); GUILLEZ, Jean-Marc, F-79140 Ciriéres (FR); QUEVEAU, Paul, F-79140 Montravers (FR)
(74) Mandataire: Novagraaf IP
(86) Numéro de dépôt international: PCT/FR2004/000292
(87) Numéro de publication internationale: WO 2004/082972

(56) Documents cités:
- EP-A- 0 764 553
- FR-A- 2 814 404
- FR-A- 2 819 757

## Description

La présente invention concerne un toit escamotable de véhicule, et plus particulièrement un tel toit comprenant un élément de toit avant et un élément de toit arrière rigides déplaçables entre une position dans laquelle ils recouvrent l'habitacle du véhicule et une position dans laquelle ils sont rangés dans le coffre arrière du véhicule.

Un tel toit escamotable permet de transformer un véhicule du type berline ou coupé en un véhicule du type cabriolet.

On connaît par le document FR-A-2 828 137 un toit escamotable dont l'élément arrière se loge verticalement à l'avant du coffre arrière, et dont l'élément avant se loge horizontalement dans le coffre. L'agencement décrit n'est toutefois pas applicable lorsque la longueur de l'élément arrière est supérieure à la hauteur du coffre.

On connaît également par le document FR-A-2 814 404 un toit escamotable dont l'élément arrière a sa partie arrière guidée par une glissière.

Par ailleurs, il n'est pas prévu de moyens permettant de ranger l'élément avant du toit dans le coffre arrière tout en maintenant l'élément arrière en position de recouvrement.

La présente invention vise à pallier ces inconvénients.

Plus particulièrement, l'invention a pour but de fournir un toit escamotable dans un coffre arrière de hauteur relativement faible.

L'invention a également pour but de fournir un toit escamotable dont l'élément arrière peut demeurer en place tandis que l'élément avant est rangé dans le coffre arrière.

L'invention a encore pour but de fournir un toit escamotable dont le rangement et le déploiement ne nécessite pas l'ouverture du coffre arrière, qui peut donc ne s'ouvrir que de l'arrière vers l'avant.

A cet effet, l'invention a pour objet un toit escamotable de véhicule, comprenant un élément de toit avant et un élément de toit arrière rigides déplaçables entre une position dans laquelle ils recouvrent l'habitacle du véhicule et une position dans laquelle ils sont rangés dans le coffre arrière du véhicule, caractérisé en ce que :
- l'élément de toit arrière a sa partie arrière guidée par une première glissière solidaire de la structure du véhicule ou de l'élément de toit arrière et sa partie avant solidaire d'une deuxième glissière coopérant avec un bras de manoeuvre articulé à la structure du véhicule et actionné par des moyens d'entraînement ;
- un organe rigide relie ledit bras à la partie arrière de l'élément de toit arrière ;
- l'élément de toit avant a sa partie arrière guidée par une troisième glissière dont la partie arrière est guidée dans ladite première glissière et dont la partie avant est articulée audit bras ;
- des moyens sont prévus pour faire coulisser l'élément de toit avant sur ladite troisième glissière.

Dans un mode de réalisation particulier, le toit escamotable selon l'invention comprend des moyens de verrouillage de ladite deuxième glissière sur ledit bras de manoeuvre.

Plus particulièrement, lesdits moyens de verrouillage peuvent comprendre un crochet monté sur ladite deuxième glissière et agencé pour verrouiller un doigt solidaire dudit bras avec un ergot solidaire de ladite glissière, et des moyens d'actionnement dudit crochet.

Egalement dans un mode de réalisation particulier, le toit escamotable selon l'invention comprend des moyens de déverrouillage de ladite deuxième glissière sur ledit bras de manoeuvre, et de verrouillage de ladite deuxième glissière sur la structure du véhicule, lorsque les éléments de toit sont rangés dans le coffre arrière du véhicule.

Il est ainsi possible de ramener l'élément arrière du toit en position de recouvrement tout en laissant l'élément avant rangé dans le coffre arrière du véhicule.

Plus particulièrement, les moyens d'actionnement dudit crochet peuvent être agencés pour verrouiller ledit crochet à la structure du véhicule et pour bloquer le mouvement de la troisième glissière par rapport à la première glissière.

On décrira maintenant, à titre d'exemple non limitatif, un mode de réalisation particulier de l'invention, en référence aux dessins schématiques annexés dans lesquels :
- la figure. 1 est une vue de côté d'un toit selon l'invention en position de recouvrement ;
- la figure 2 est une vue en coupe à grande échelle selon la ligne II-II de la figure 1 ;
- la figure 3 est une vue similaire à la figure 1 avec le toit en cours de rangement ;
- la figure 4 est une vue similaire aux figures 1 et 3 avec le toit en position de rangement ;
- la figure 5 est une vue similaire aux figures 1, 3 et 4 avec le toit partiellement ouvert ;

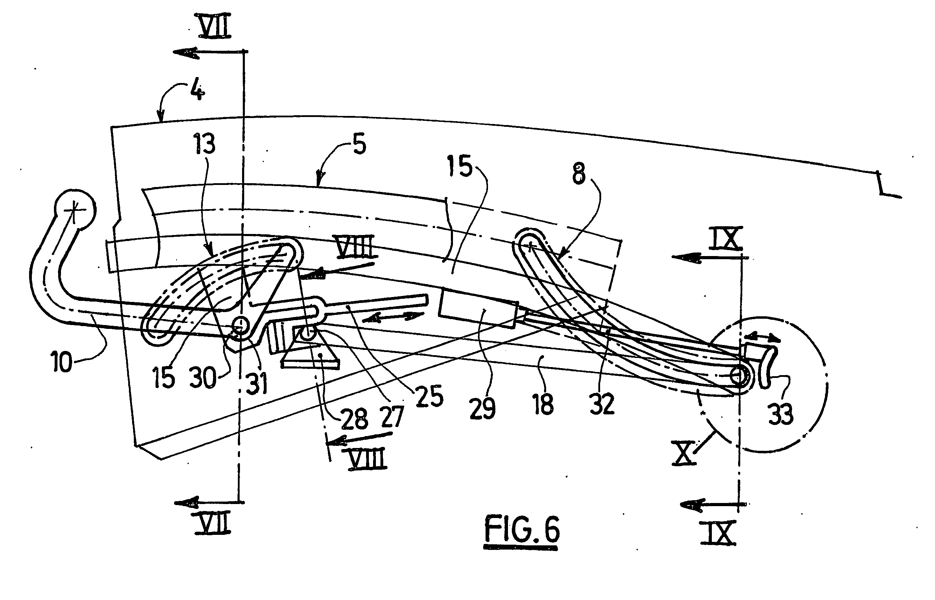

- la figure 6 est une vue à plus grande échelle du mécanisme de toit dans sa position de la figure 4 ;
- la figure 7 est une vue en coupe selon la ligne VII-VII de la figure 6 ;
- la figure 8 est une vue en coupe selon la ligne VIII-VIII de la figure 6 ;
- la figure 9 est une vue en coupe selon la ligne IX-IX de la figure 6 ; et
- la figure 10 est une vue à plus grande échelle du détail 10 de la figure 6.

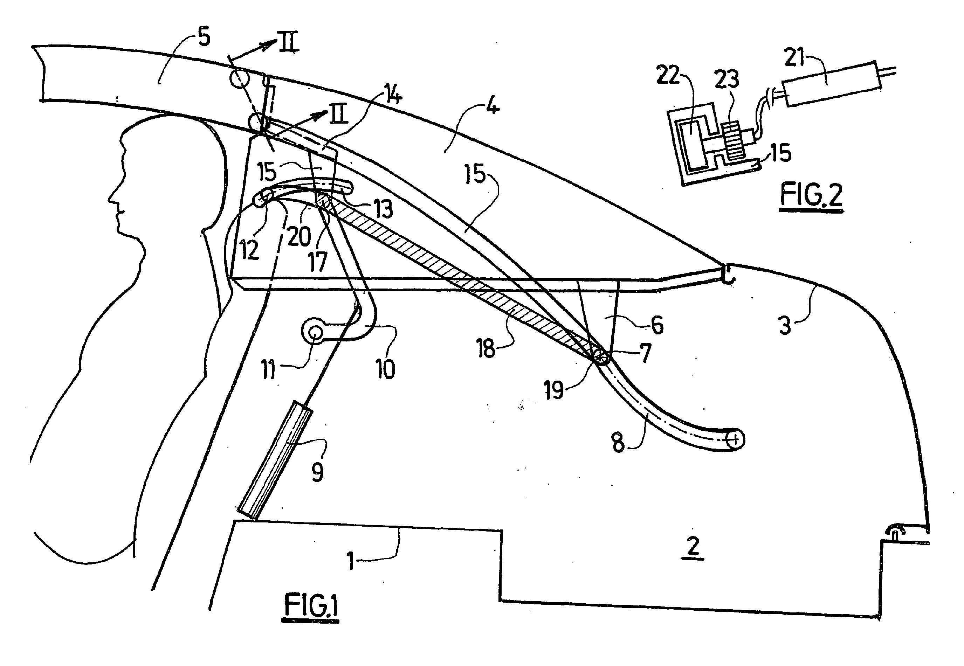

On voit à la figure 1 la structure 1 d'un véhicule, son coffre arrière 2 muni de son couvercle 3, ainsi que le toit en deux parties, une partie arrière 4 et une partie avant 5.

Le mécanisme qui va être décrit est sensiblement symétrique par rapport au plan médian du véhicule, aussi un seul des côtés sera t-il décrit.

L'élément de toit 4 supporte à sa partie arrière des pattes 6 sur chacune desquelles est monté un doigt de guidage 7. Le doigt de guidage coopère avec une glissière 8 solidaire de la structure du véhicule.

Par ailleurs, l'élément de toit 4 est actionné par un vérin 9 par l'intermédiaire d'un bras 10. Le bras 10 a une de ses extrémités articulée sur la structure du véhicule autour d'un axe transversal 11 et son autre extrémité est munie d'un doigt 12 engagé dans une glissière 13 solidaire de l'élément arrière 4.

L'élément de toit avant 5 est monté coulissant par son prolongement 14 dans une glissière 15.

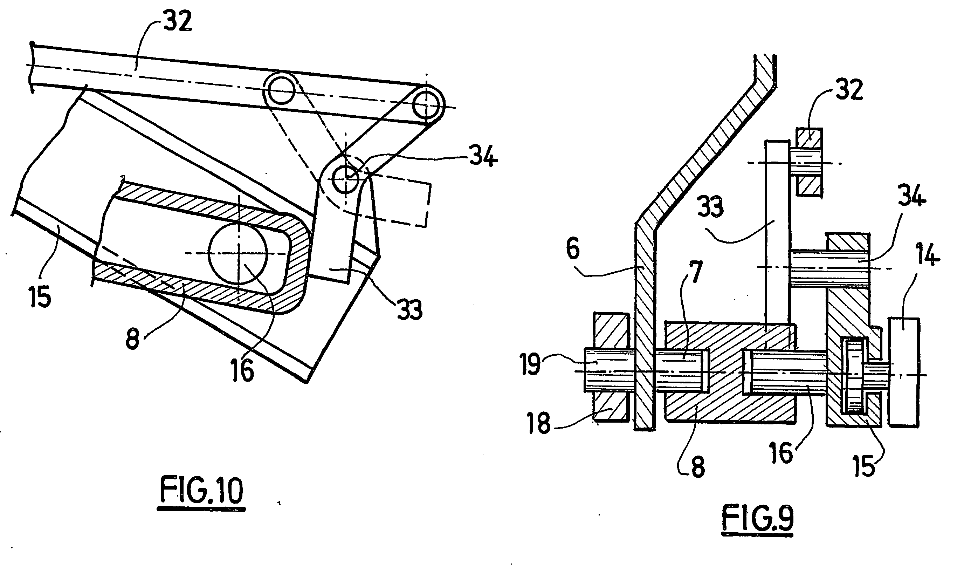

La glissière 15 a sa partie arrière guidée par un doigt de guidage 16 engagé dans une deuxième rainure de la glissière 8 (figure 9). L'extrémité avant de la glissière 15 est reliée au bras 10 en un point médian de ce dernier par un axe transversal 17 pour escamoter la glissière 15 dans le coffre du véhicule, en même temps que l'élément de toit arrière 4.

Une tige rigide 18 a son extrémité arrière reliée à la patte 6 par un axe 19. L'autre extrémité de la tige 18 est reliée au bras 10 en un plan médian de celui-ci par un axe transversal 20.

La tige 18 permet par conséquent de garder un écart constant entre le bras 10 et l'arrière de la partie de toit arrière 4. La tige assure en outre l'entraînement de l'élément de toit arrière 4 lorsqu'elle est poussée par le bras 10.

Comme montré à la figure 2, l'élément de toit avant 5 est entraîné sur la glissière 15 à l'aide d'un moteur 21 solidaire de l'élément 5. A cet effet, un doigt 22 guide l'élément 5 dans la glissière 15 et un système de crémaillère 23 solidaire du galet 22 et entraîné par le moteur 21 permet d'actionner l'élément 5 dans la glissière 15.

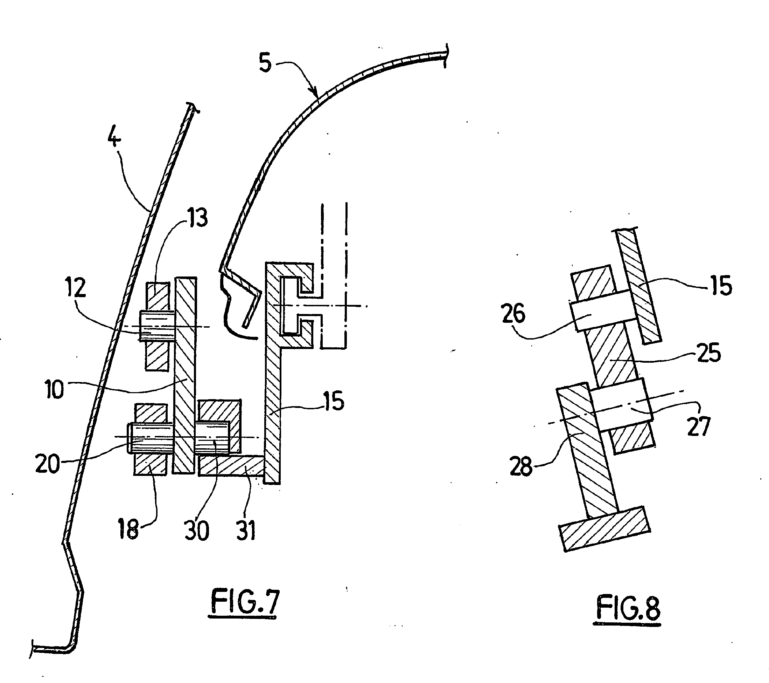

Un crochet 25 est monté coulissant en 26 sur la glissière 15. Le crochet 25 est susceptible de se verrouiller sur un doigt 27 solidaire d'une pièce 28 elle-même solidaire de la structure du véhicule (figure 8).

Le crochet 25 est actionné par un moteur 29 solidaire de la glissière 15 et peut coulisser dans le sens longitudinal du véhicule sur l'organe 30.

Le bras 10 comporte par ailleurs un doigt 30 susceptible de venir en butée sur un ergot 31 solidaire de la glissière 15 (figure 7).

A l'opposé du crochet 25, le moteur 29 actionne une tige 32 reliée à une bielle 33. La bielle 33 est articulée sur l'extrémité arrière de la glissière 15 autour d'un axe transversal 34 (figure 10).

Lorsque le toit est en position fermée, au-dessus de l'habitacle du véhicule, l'élément avant 5 du toit est bloqué sur le bras 10 par l'intermédiaire de la glissière 15. Le doigt 30° est verrouillé entre le bord avant du crochet 25 et l'ergot 31. Les éléments de toit sont ainsi verrouillés.

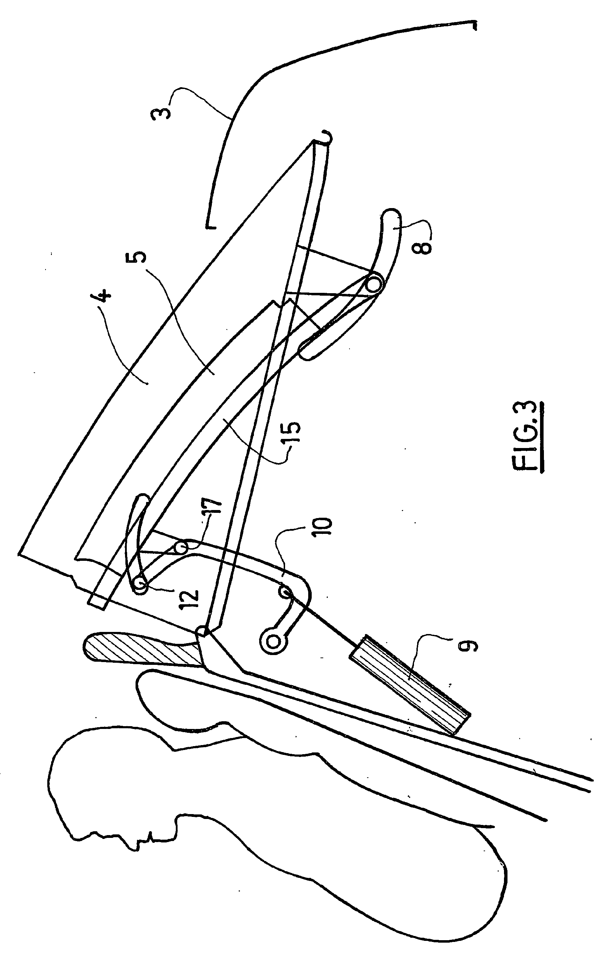

Lors de l'ouverture, l'élément avant 5 est entraîné sur la glissière 15 par le moteur 21. La première étape de l'ouverture consiste à dégager le bord arrière de l'élément avant 5 du bord avant de l'élément arrière 4. Le bras 10 bascule vers l'arrière grâce au vérin 9. Ce basculement permet à l'élément avant 5 de s'engager sous l'élément arrière 4 comme montré à la figure 3.

Le toit est ensuite entraîné dans le coffre arrière par la poursuite du basculement du bras 10 qui entraîne également la glissière 15. Pendant ce mouvement, la distance entre les éléments de toit avant 5 et arrière 4 est conservée par la coopération de la glissière 13 avec le doigt 12.

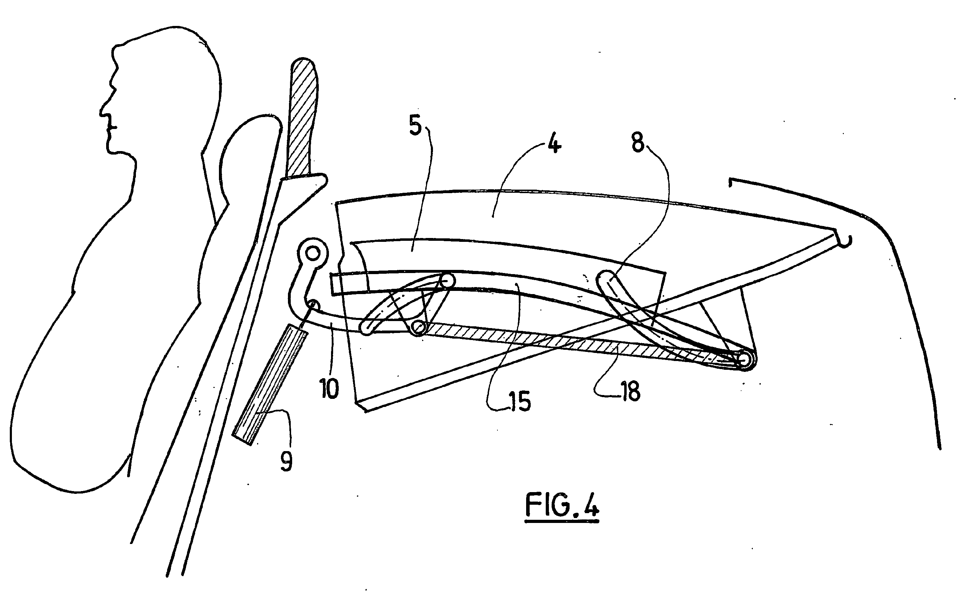

Le toit se trouve alors dans la configuration représentée à la figure 4. Dans cette configuration, un cache-bagages peut être tendu entre le dossier du siège et le bord avant du couvercle 3 du coffre arrière.

Lorsque les éléments de toit sont rangés dans le coffre arrière, l'élément avant 5 et la glissière 15 peuvent être déverrouillés de l'élément arrière 4 pour être verrouillés à la structure du véhicule ainsi qu'à la glissière 8.

A cet effet, le moteur 29 déplace le crochet 25 vers l'arrière, ce qui a pour effet de déverrouiller la glissière 15 du bras 10. Le crochet 25 vient alors se verrouiller sur le doigt 27 qui, par l'intermédiaire de la pièce 28, est solidaire de la structure du véhicule.

Par ailleurs, le moteur 29 actionne la tige 32 et ainsi la bielle 33. La bielle 33 est ainsi verrouillée sur le bord arrière de la glissière 8 empêchant la glissière 15 de se déplacer le long de la glissière 8.

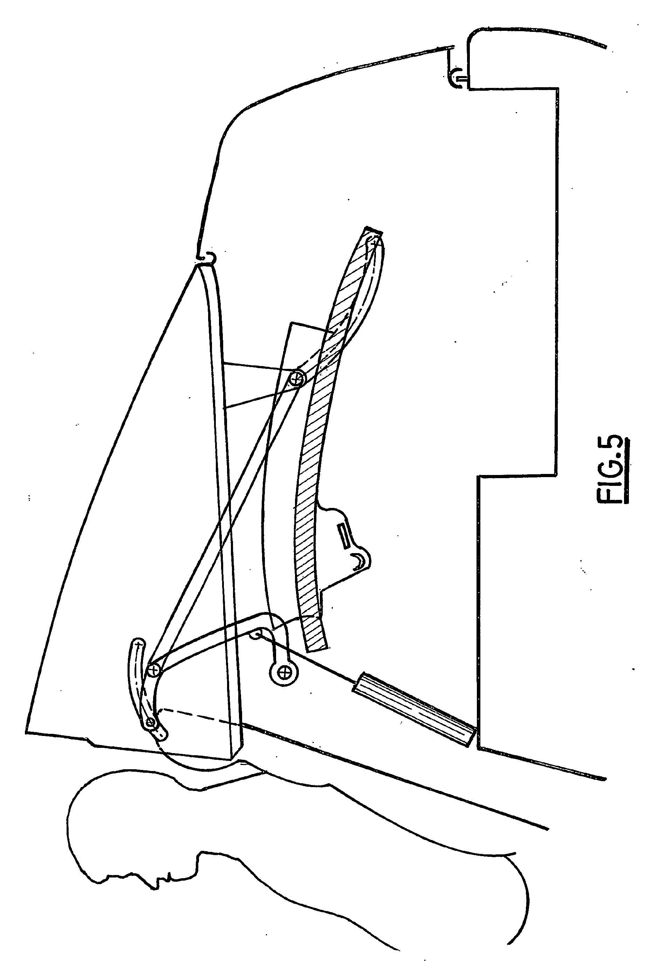

L'élément arrière 4 du toit peut alors remonter pour venir dans la configuration de la figure 5.

On observera que la cinématique décrite ci-dessus permet le rangement horizontal des éléments de toit dans le coffre arrière. Mais il serait tout aussi possible de les ranger verticalement dans l'hypothèse où leur longueur n'excéderait pas la hauteur du coffre.

On observera également que la glissière de guidage de l'élément arrière du toit pourrait aussi bien être solidaire de cet élément que de la structure du véhicule. Dans ce cas, cette glissière coopérerait avec des doigts de guidage solidaires des parois du coffre arrière.

## Revendications

1. Toit escamotable de véhicule, comprenant un élément de toit avant (5) et un élément de toit arrière (4) rigides déplaçables entre une position dans laquelle ils recouvrent l'habitacle du véhicule et une position dans laquelle ils sont rangés dans le coffre arrière (2) du véhicule, où
- l'élément de toit arrière a sa partie arrière guidée par une première glissière (8) solidaire de la structure (1) du véhicule ou de l'élément de toit arrière **caractérisé en ce que** l'élément de toit arrière a sa partie avant solidaire d'une deuxième glissière (13) coopérant avec un bras de manoeuvre (10) articulé à la structure du véhicule et actionné par des moyens d'entraînement (9) ;
- un organe rigide (18) relie ledit bras à la partie arrière de l'élément de toit arrière ;
- l'élément de toit avant a sa partie arrière guidée par une troisième glissière (15) dont la partie arrière est guidée dans ladite première glissière et dont la partie avant est articulée audit bras ;
- des moyens (21-23) sont prévus pour faire coulisser l'élément de toit avant sur ladite troisième glissière.

2. Toit escamotable selon la revendication 1, comprenant des moyens de verrouillage (25, 27, 31) de ladite deuxième glissière sur ledit bras de manoeuvre.

3. Toit escamotable selon la revendication 2, dans lequel lesdits moyens de verrouillage comprennent un crochet (25) monté sur ladite deuxième glissière et agencé pour verrouiller un doigt (27) solidaire dudit bras avec un ergot (31) solidaire de ladite glissière, et des moyens (29) d'actionnement dudit crochet.

4. Toit escamotable selon l'une quelconque des revendications 2 et 3, comprenant des moyens (29, 32, 33) de déverrouillage de ladite deuxième glissière sur ledit bras de manoeuvre, et de verrouillage de ladite deuxième glissière sur la structure du véhicule, lorsque les éléments de toit sont rangés dans le coffre arrière du véhicule.

5. Toit escamotable selon l'ensemble des revendications 3 et 4, dans lequel les moyens d'actionnement dudit crochet sont agencés pour verrouiller ledit crochet à la structure du véhicule et pour bloquer le mouvement de la deuxième glissière par rapport à la première glissière.

## Claims

1. A convertible roof for a vehicle including a front (5) roof element and rear (4) roof element which are rigid and movable between a position in which these elements cover the passenger compartment of the vehicle, and a position in which such elements are stored in the trunk (2) of the vehicle, wherein:
- the rear roof element has a rear part guided by a first slide (8) integral with the structure (1) of the vehicle or the rear roof element, **characterized in that** the rear roof element has a front part integral with a second slide (13) cooperating with an operation arm (10) articulated on the structure of the vehicle and actuated by driving means (9);
- a rigid member (18) connects said arm with the rear part of the rear roof element;
- the front roof element has a rear part guided by a third slide (15) the rear part of which is guided in said first slide and the front part of which is articulated on said arm;
- means (21-23) are provided for causing the front roof element to slide on said third slide.

2. A convertible roof according to claim 1, including means (25, 27, 31) for locking said second slide (11, 32) on said operation arm.

3. A convertible roof according to claim 2, wherein said locking means include a hook (25) mounted on said second slide and so arranged as to lock a finger (27) integral with said arm with a pin (31) integral with said slide, and means (29) for actuating said hook.

4. A convertible roof according to any one of claims 2 and 3, including means (29, 32, 33) for unlocking said second slide on said operation arm, and for locking said second slide on the structure of the vehicle, when the roof elements are stored in the trunk of the vehicle.

5. A convertible roof according to both claims 3 and 4, wherein the hook actuating means are so arranged as to lock said hook to the structure of the vehicle and to stop the movement of the second slide with respect to the first slide.

## Patentansprüche

1. Einziehbares Fahrzeugdach mit einem steifen vorderen Dachelement (5) und einem steifen hinteren Dachelement (4), die zwischen einer Position verschiebbar sind, in der sie die Kabine des Fahrzeugs abdecken, und einer Position, in der sie im hinteren Kofferraum (2) des Fahrzeugs verstaut sind, in dem:
- der hintere Teil des hinteren Dachelements durch eine erste, fest mit der Struktur des Fahrzeugs oder des hinteren Elements des Dachs verbundenen Schiene (8) geführt wird und **dadurch gekennzeichnet, dass** der vordere Teil des hinteren Dachelements fest mit einer zweiten Schiene (13) verbunden ist, die mit einem Schaltarm (10) zusammenwirkt, an der Struktur des Fahrzeugs artikuliert ist und durch Antriebsmittel (9) betätigt wird;
- ein steifes Organ (18) den genannten Arm an dem hinteren Teil des hinteren Dachelements verbindet;
- der hintere Teil des vorderen Dachelements durch eine dritte Schien (15) geführt wird, deren hinterer Teil in der genannten ersten Schiene geführt wird und deren vorderer Teil an dem genannten Arm artikuliert ist;
- Mittel (21 - 23) vorgesehen sind, um das vordere Dachelement auf der genannten dritten Schiene gleiten zu lassen.

2. Einziehbares Dach gemäß Anspruch 1, das Verriegelungsmittel (25, 27, 31) der genannten zweiten Schiene auf dem genannten Schaltarm umfasst.

3. Einziehbares Dach gemäß Anspruch 2, in dem die genannten Verriegelungsmittel einen Haken (25) umfassen, der auf der genannten Schiene montiert und angeordnet ist, um einen fest mit dem genannten Arm verbundenen Finger (27) mit einem fest mit der genannten Schiene verbundenen Vorsprung (31) zu verriegeln, und Betätigungsmittel (29) des genannten Hakens.

4. Einziehbares Dach gemäß Anspruch 2 und 3, das Entriegelungsmittel (29, 32, 33) der genannten zweiten Schiene auf dem genannten Schaltarm und Verriegelungsmittel der genannten zweiten Schiene auf der Struktur des Fahrzeugs umfasst, wenn die Dachelemente im hinteren Kofferraum des Fahrzeugs verstaut sind.

5. Einziehbares Dach gemäß Anspruch 3 und 4, in dem die Betätigungsmittel des genannten Hakens angeordnet sind, um den genannten Haken an der Struktur des Fahrzeugs zu verriegeln und um die Bewegung der zweiten Schiene im Verhältnis zur ersten Schiene zu blockieren.
